# EUROPÄISCHE PATENTSCHRIFT

(11) **EP 0 768 764 B1**
(45) Veröffentlichungstag und Bekanntmachung des Hinweises auf die Patenterteilung: **07.07.2004**
(21) Anmeldenummer: 96112589.5
(22) Anmeldetag: 03.08.1996
(51) Int. Cl.: H04B 7/08

(54) **Schaltanordnung zur Steuerung eines Antennendiversitys für ein zugeordnetes Rundfunkgerät**
Circuit for controlling antenna diversity for associated radio apparatus
Circuit de commande d'une diversité d'antenne pour appareil radio associé

(30) Priorität: 13.10.1995 DE 19538109
(43) Veröffentlichungstag der Anmeldung: 16.04.1997
(73) Patentinhaber: Bayerische Motoren Werke Aktiengesellschaft, 80788 München (DE)
(72) Erfinder: Schneider, Steffen, 85716 Unterschleissheim (DE)

(56) Entgegenhaltungen:
- EP-A- 0 398 710
- DE-A- 4 204 490

## Beschreibung

Die Erfindung bezieht sich auf eine Schaltanordnung mit den Merkmalen des Oberbegriffs von Patentanspruch 1.

Eine derartige Schaltanordnung zur Steuerung eines Antennendiversitys wird in Kraftfahrzeugen der Anmelderin verwendet und dient dazu, abhängig von der Empfangsqualität das Antennendiversity zu steuern. Von den mehrfach vorgesehenen Antennen soll die mit der besten Empfangsqualität ausgewählt werden. Diese Schaltanordnung zeichnet sich gegenüber früheren ähnlichen Anordnungen durch einen vereinfachten Aufbau aus. Da das hochfrequente Antennensignal und das zwischenfrequente Steuersignal auf ein und derselben Verbindungsleitung liegen, kann eine früher vorgesehene separate Verbindungsleitung für das zwischenfrequente Steuersignal entfallen. Um eine Abstrahlung des zwischenfrequenten Steuersignals über die jeweils aktive Antenne zu vermeiden, ist im Antennendiversity eine oder mehrere Blockiermaßnahmen vorgesehen. So ist beispielsweise ein Zwischenfrequenz-Saugkreis und/oder ein Zwischenfrequenz-Sperrkreis vorgesehen.

In diesem Zusammenhang sind aus der DE 42 04 490 schaltungstechnische Maßnahmen bekannt, um Umschaltstörungen beim Umschalten innerhalb eines Antennen-Diversitys zu unterdrücken. Ferner ist es aus der EP 0 398 710 A bekannt, eine Leitungsunterbrechung zwischen den einzelnen Antennen eines Antennen-Diversitys und einem Rundfunkgerät zu erkennen.

Probleme ergeben sich bei der Schaltanordnung der eingangs genannten Art dann, wenn kein Antennendiversity, sondern eine einfache Antenne, beispielsweise eine Stabantenne verbaut ist. In diesem Fall ist als Blockiermaßnahme beispielsweise ein zusätzliches Sperrfilter vorzusehen, das der Stabantenne vorgeschaltet ist.

Der Erfindung liegt die Aufgabe zugrunde, eine Schaltanordnung der eingangs genannten Art zu schaffen, bei der mit schaltungstechnisch geringem Aufwand die Existenz eines Antennendiversitys für das Rundfunkgerät erkennbar ist.

Die Erfindung löst diese Aufgabe durch die Merkmale des Patentanspruchs 1.

Das Rundfunkgerät gibt nunmehr zusätzlich ein Prüfsignal auf die Verbindungsleitung aus und erhält aufgrund des Reaktionssignals die Möglichkeit, ein ggf. vorhandenes Antennendiversity zu erkennen. Ist dieses nicht vorhanden, ist das Zwischenfrequenzsignal überflüssig und wird vom Rundfunkgerät nicht ausgegeben.

Die Ausgabe des Prüfsignals kann einmalig zu definierten Zeitpunkten erfolgen. Bei einem Kraftfahrzeug kann es sich dabei um die Inbetriebnahme handeln. Das Prüfsignal kann auch in regelmäßigen zeitlichen Abständen ausgegeben werden, um eine ggf. vorliegende Fehlaussage zu korrigieren. Besonders vorteilhaft ist es, das Prüfsignal kontinuierlich auszugeben.

Eine besonders vorteilhafte Möglichkeit hierzu besteht darin, als Prüfsignal eine Gleichspannung zu verwenden und im Antennendiversity einen Verbrauchswiderstand vorzusehen. Ist ein Antennendiversity nicht vorhanden, so wird die Gleichspannung durch die Antenne nicht oder zumindest nicht in dem Maß wie durch den Verbrauchswiderstand beeinflußt. Für das Rundfunkgerät ist damit ohne weiteres erkennbar, daß eine Antennendiversity nicht vorhanden ist.

Eine besonders vorteilhafte Möglichkeit, die Gleichspannung auszugeben, besteht darin, als Gleichspannung die Schaltspannung zu verwenden, mit der das Rundfunkgerät in einem Antennendiversity die Betriebsart bestimmt. Darunter ist die Wahl der Betriebsart für AM- bzw. FM-Empfang zu verstehen.

Ein besonders vorteilhafter Aufbau des Spannungsteilers besteht darin, im Rundfunkgerät einen Meßwiderstand vorzusehen, der zusammen mit dem Verbrauchswiderstand den Spannungsteiler bildet. Anhand der am Meßwiderstand abfallenden Spannung kann ohne weiteres auf die Existenz bzw. das Fehlen des Antennendiversity geschlossen werden.

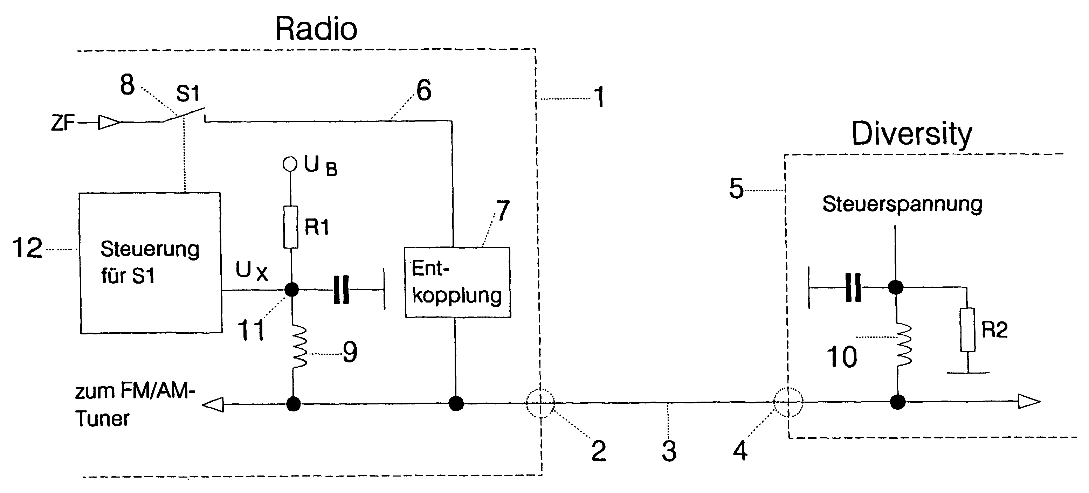

Anhand der Zeichnung ist die Erfindung weiter erläutert. Es zeigt die einzige Figur den prinzipiellen Aufbau einer Schaltanordnung zum Erkennen eines ggf. vorhandenen Antennendiversitys durch ein zugeordnetes Rundfunkgerät.

Ein ausschnittsweise dargestelltes Rundfunkgerät 1, vorzugsweise für ein nicht dargestelltes Kraftfahrzeug erhält an einem Eingang 2 über eine Verbindungsleitung 3 ein hochfrequentes Eingangssignal, das am Ausgang 4 eines ausschnittsweise dargestellten Antennendiversitys 5 ausgegeben wird. Das Diversity 5 enthält mehrere gleichartige Antennen für FM-Empfang (UKW) sowie ebenfalls nicht dargestellt eine Antenne für AM-Empfang (MW, KW, LW). Innerhalb des Rundfunkgeräts 1 gelangt das Antennensignal zu einem FM/AM-Tuner (nicht dargestellt) und wird an Lautsprecher ausgegeben.

Zur Steuerung des Diversitys 5 liefert das Rundfunkgerät 1 über den Ausgang 2 und die Verbindungsleitung ein zwischenfrequentes Steuersignal an das Diversity 5. Zur Verhinderung einer Abstrahlung dieses Signals über die Antenne ist im Diversity 5 eine oder mehrere Blockiermaßnahmen in Form von ZF-Saugkreisen, ZF-Sperrkreisen und dgl. vorgesehen, die nicht im einzelnen dargestellt sind.

Ist kein Antennendiversity 5, sondern eine einfache Antenne, in Form einer Stabantenne verbaut, so wird die Ausgabe des zwischenfrequenten Steuersignals durch das Rundfunkgerät 1 verhindert. Hierzu ist in der Leitung 6, in der das innerhalb des Rundfunkgeräts 1 erzeugte Zwischenfrequenzsignal über eine nachgeschaltete Entkopplung 7 auf den Ausgang 2 und damit die Verbindungsleitung 3 gegeben wird, ein gesteuerter Schalter 8 angeordnet.

Erkannt wird die Existenz des Diversitys 5 mit Hilfe eines Spannungsteilers, der im wesentlichen besteht aus einem Widerstand R1 innerhalb des Rundfunkgeräts 1 und einem Widerstand R2 innerhalb des Diversitys 5, die über Drosseln 9 und 10 an der Verbindungsleitung 3 angeschlossen sind. Der Spannungsteiler ist mit einer Gleichspannung U_{B} beaufschlagt, bei der es sich beispielsweise um die Schaltspannung handelt, mit der im Diversity 5 die Betriebsart (FM bzw. AM) ausgewählt wird. Für die Gleichspannung sind die Drosseln 9 und 10 ohne Einfluß.

Abhängig davon, ob das Diversity 5 vorhanden ist, ergibt sich am Mittelpunkt 11 des Spannungsteilers eine Spannung U_{X}, die eine exakte Beantwortung der Frage nach der Existenz eines Diversitys 5 zuläßt. Ist das Diversity 5 vorhanden, so ist die Spannung U_{X} beispielsweise gleich dem halben Wert der Spannung U_{B}, sofern die Widerstände R1 und R2 den gleichen Wert besitzen. Ist das Diversity 5 nicht vorhanden, so ist der Wert der Spannung am Meßpunkt 11 in etwa gleich dem Wert der Spannung U_{B}. Eine Auswerteschaltung 12 schaltet den Schalter 8 abhängig von der Existenz bzw. dem Fehlen des Diversitys 5 in den offenen bzw. geschlossenen Zustand. Bei der Spannung U_{B} kann es sich um die Schaltspannung handeln, mit der das Rundfunkgerät 1 dem Diversity 5 die Betriebsart vorgibt.

## Patentansprüche

1. Schaltanordnung zur Erkennung und Steuerung eines Antennendiversitys (5) für ein zugeordnetes Rundfunkgerät (1), mit einer Verbindungsleitung (3) zwischen Antennendiversity und Rundfunkgerät, auf der das hochfrequente Antennensignal und ein vom Rundfunkgerät ausgehendes zwischenfrequentes Steuersignal für das Antennendiversity liegt, **dadurch gekennzeichnet, dass** das Rundfunkgerät über eine einzige Leitung (3) mit dem Antennendiversity verbunden ist, dass das Rundfunkgerät zusätzlich ein Prüfsignal auf diese Verbindungsleitung (3) legt und dass das durch das Antennendiversity beeinflusste und über diese Leitung an das Rundfunkgerät übertragene Reaktionssignal im Rundfunkgerät auswertbar ist.

2. Schaltanordnung nach Anspruch 1, **dadurch gekennzeichnet, dass** das Prüfsignal eine Gleichspannung ist und im Antennendiversity (5) hierfür ein Verbrauchswiderstand (R2) vorgesehen ist.

3. Schaltanordnung nach Anspruch 2, **dadurch gekennzeichnet, dass** die Gleichspannung gleich der Schaltspannung ist, mit der das Rundfunkgerät (1) im Antennendiversity (5) die Betriebsart bestimmt.

4. Schaltanordnung nach Anspruch 2 oder 3, **dadurch gekennzeichnet, dass** der Verbrauchswiderstand (R2) Teil eines Spannungsteilers ist, der durch einen Messwiderstand (R1) im Rundfunkgerät (1) ergänzt ist.

## Claims

1. A circuit arrangement for recognition and control of a plurality of different antennae (5) for an associated radio apparatus (1), comprising a connecting line (3) between the plurality of different antennae and the radio apparatus and carrying the high-frequency antenna signal and an intermediate-frequency control signal for the plurality of different antennae from the radio apparatus, **characterised in that** the radio apparatus is connected by a single line (3) to the plurality of different antennae, the radio apparatus additionally applies a test signal to the connecting line (3), and the response signal influenced by the plurality of different antennae and transmitted along the radio apparatus along the line can be evaluated in the radio apparatus.

2. A circuit arrangement according to claim 1, **characterised in that** the test signal is a DC voltage and a load resistor (R2) for it is provided in the plurality of different antennae (5).

3. A circuit arrangement according to claim 2, **characterised in that** the DC voltage is equal to the switching voltage whereby the radio apparatus (1) determines the mode of operation in the plurality of different antennae (5).

4. A circuit arrangement according to claim 2 or 3, **characterised in that** the load resistor (R2) is part of a voltage divider supplemented by a precision resistor (R1) in the radio apparatus (1).

## Revendications

1. Circuit de détection et de commande d'une diversité d'antennes (5) pour un appareil radio (1) associé avec une ligne de raccordement (3) entre la diversité d'antennes et l'appareil radio sur laquelle se trouvent le signal d'antenne à haute fréquence et un signal de commande à fréquence intermédiaire provenant de l'appareil radio pour la diversité d'antennes,
**caractérisé en ce que**
l'appareil radio est relié à la diversité d'antennes via une seule ligne (3), l'appareil radio place en plus un signal test sur la ligne de raccordement (3) et le signal de réaction transféré à l'appareil radio via cette ligne et influencé par la diversité d'antennes peut être évalué dans l'appareil radio.

2. Circuit selon la revendication 1,
**caractérisé en ce que**
le signal test est une tension continue et une résistance de consommation (R2) est prévue à cet effet dans la diversité d'antennes (5).

3. Circuit selon la revendication 2,
**caractérisé en ce que**
la tension continue est égale à la tension de commutation avec laquelle l'appareil radio (1) détermine le mode de fonctionnement dans la diversité d'antennes (5).

4. Circuit selon la revendication 2 ou 3,
**caractérisé en ce que**
la résistance de consommation (R2) fait partie d'un diviseur de tension qui est complété par une résistance de mesure (R1) dans l'appareil radio (1).
